Europäisches Patentamt

European Patent Office

Office européen des brevets

(19)

(11) Publication number: **0 049 037**
**B1**

(12) **EUROPEAN PATENT SPECIFICATION**

(45) Date of publication of patent specification: **16.05.84**

(51) Int. Cl.³: **B 23 K 9/02**

(21) Application number: **81303570.6**

(22) Date of filing: **05.08.81**

(54) **Method and apparatus for the narrow gap welding of thick tubes.**

(30) Priority: **16.09.80 JP 128716/80**

(43) Date of publication of application:
**07.04.82 Bulletin 82/14**

(45) Publication of the grant of the patent:
**16.05.84 Bulletin 84/20**

(84) Designated Contracting States:
**DE FR GB SE**

(56) References cited:
**DE-A-1 926 866**
**FR-A-1 423 458**
**US-A-1 508 691**
**US-A-3 797 813**
**US-A-4 188 526**

(73) Proprietor: **KABUSHIKI KAISHA KOBE SEIKO SHO also known as Kobe Steel Ltd.**
**3-18 1-chome, Wakinohama-cho Chuo-ku**
**Kobe 651 (JP)**

(72) Inventor: **Ogata, Yoji**
**380-93, Watauchi**
**Fujisawa-shi Kanagawa-ken (JP)**
Inventor: **Kashimura, Toshisada**
**1-1, Katsura-cho**
**Totsuka-ku Yokohama-shi (JP)**
Inventor: **Miyamoto, Tsukashi**
**2-15-8-305, Fujigaoka**
**Fuji-sawa-shi Kanagawa-ken (JP)**

(74) Representative: **Boon, Graham Anthony et al**
**Elkington and Fife High Holborn House 52/54**
**High Holborn**
**London, WC1V 6SH (GB)**

## Description

This invention relates to a method and apparatus for the welding of tubes and more particularly, to a method and apparatus for the narrow gap welding of thick, small-sized tubes or nozzles and thick, large-sized tubes or shells.

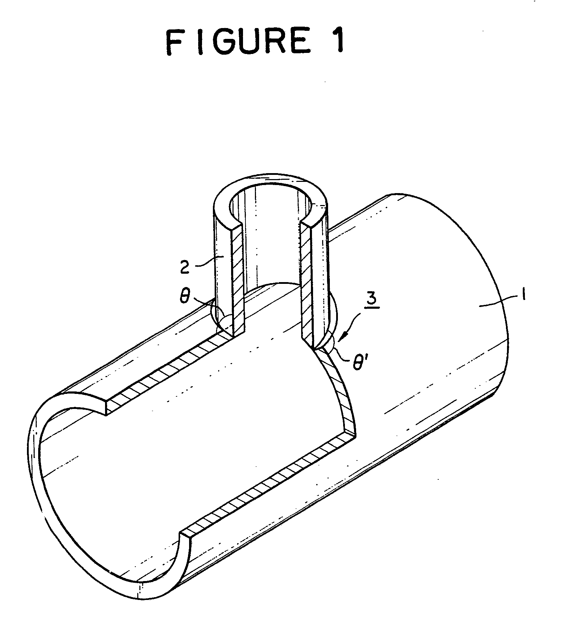

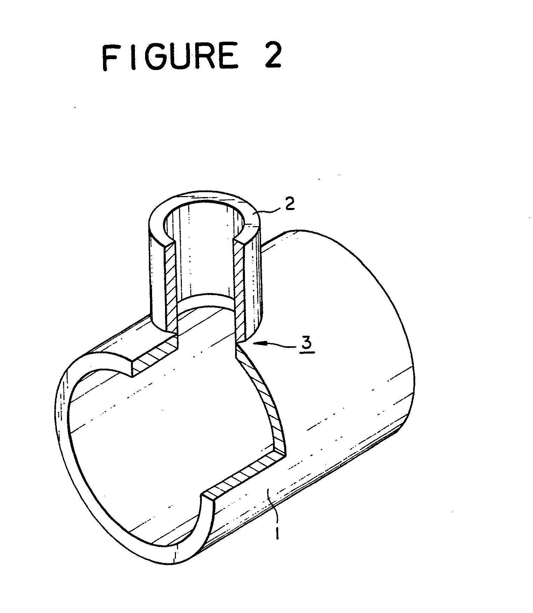

Pressure vessels obtained by welding nozzles to thick base tubes have conventionally been made, for example, by a system in which, as shown in Figure 1, a base tube (1) has a groove 3 formed in a circumferential edge of a junction port, and a nozzle 2 is set in the junction port and welded (hereinafter referred to as a set-in system). Another system which has been used is one as shown in Figure 2, in which the nozzle 2 is formed with the groove 3 and is butt welded in such a way as to be set on the junction port (hereinafter referred to as a set-on system). In welding in both systems, the junction face of the base tube 1 and nozzle 2 is taken as a weld line and they are welded approximately in a downhand position (Figure 1) or in a horizontal position (Figure 2).

The weld line formed in the set-in or set-on system assumes a so-called saddle form, so that the height or vertical position of the weld line shown in the Figures continuously changes, with the angle of intersection which is established between the surface of the base tube 1 and the surface of the nozzle 2 also continuously changing as $\theta$, $\theta'$ and the like. Accordingly, the V groove 3 shown in the Figures varies in sectional area along its circumference, lowering the stability of the welding operation.

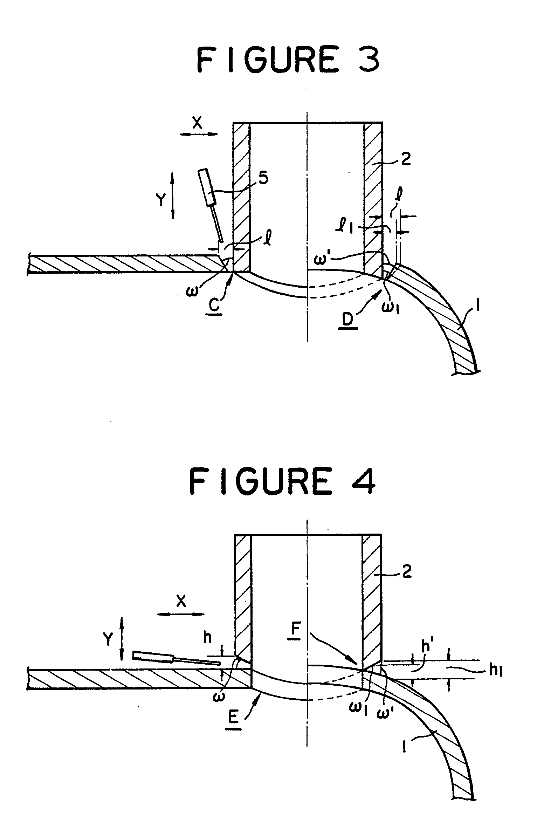

In Figure 3, there is shown an illustrative development in section, of Figure 1 showing the portions to be welded by the set-in system. Angles $\omega$, $\omega_1$ of a portion C of the groove at the uppermost side of the saddle-shaped weld line and a portion D at the undermost side thereof with respect to the vertical line, respectively, are designed and processed to be equal, with the section of the groove being made approximately equal. When designed in this manner, the width of the groove invariably becomes wider at the portion C of the groove (indicated by l) and narrower at the portion D of the groove ($l_1$). Accordingly, when a welding torch 5 is rotated concentrically with the nozzle 2, it is necessary to adjust the movement of the torch at every moment in the direction of X axis in order to cope with a variation of the width of the groove. The adjustment in the direction of the X axis as well as the adjustment in the direction of the Y axis which must be invariably carried out produces a very serious problem in automating the welding. As a matter of fact, it may be possible to process the groove in such a way that the width of the groove is made uniform over the entire circumference thereof. However, this will involve not only a problem with respect to the accuracy of processing, but also a problem that even though the width of the groove along the entire circumference could be adjusted to make "l" the width of the portion D of the groove; the angle of Vee $\omega'$ at the side D of the groove becomes greater than the angle of Vee $\omega$ at the side C of the groove (see Figure 3), so that the sectional area of the groove does not become constant along the circumference of the groove. Thus, the sectional area of groove is C<D, so that the number of welding passes at the sides C and D must be changed. If the number of passes conforms to that required at the C side, an excess of weld metal becomes insufficient at the D side of the groove, leaving a defect at the junction. On the contrary, when the number of passes conforms to that of the D side, excess weld metal is formed in unnecessarily great amounts. In addition, the rise and fall tracing in the direction of Y axis has to be adjusted more finely. Thus, the set-in system involves problems relating to the groove width and angle, making automatic welding difficult.

Figure 4 is a sectional, illustrative development of Figure 2 showing portions to be welded by the set-on system. When groove angles $\omega$ and $\omega_1$ at the upper side E and lower side F of the saddle-shaped weld line are made approximately equal, the groove widths h and $h_1$ are in such a relation that h<$h_1$ and, consequently, the sectional area are such that E<F. Even though the torch 5 has been traced concentrically with the nozzle 2, the groove widths h and $h_1$ change greatly, so that the adjustment of the torch 5 in the direction of Y axis accompanied by the saddle-shaped welding must be more finely conducted. Additionally, since the amount of molten metal varies over the entire circumference, control of the number of weld passes as described with reference to Figure 4 may be needed, which is very inconvenient.

On the other hand, when the groove angle at the F side of the nozzle 2 is adjusted (or reduced) to $\omega'$ so that the groove widths are h=h', the sectional areas of the groove can be held almost constant. However, there is a risk that the groove angle at the F side may become so small that the weld penetration at the nozzle side will become insufficient for welding in the horizontal position. In contrast, when the angle at the F side is made great, it becomes fairly great, inviting a much greater lowering of the welding workability. In thick tubes of the type discussed herein, the depth of groove may reach about 100 mm and thus the groove section becomes large, so that the various problems described above are further emphasized, making automating the welding still more difficult. As for the type of automatic welding technique which should be applied to those portions discussed above, it is generally considered appropriate to make use of submerged arc welding or gas shielded arc welding. However, since the former technique requires keeping the sprayed flux on the weld line, it is applicable only to a case where the angle of inclination of the weld line is small, i.e. to a case where the ratio of the diameter of the nozzle to the diameter of the base tube is small. In the latter technique, there is a danger that in order to prevent the molten pool from flowing, multipass welding moulding using low electric current must be conducted, with the result that a lack of fusion will frequently occur. To avoid this, it is general to resort to manual or semiautomatic welding made by skilled operators.

Discussions of welding of the type described above are to be found in the material published by Asano et al of Babcock-Hitachi Co. Ltd., on September 30, 1980 in the meeting of the Yosetsu Gakkai, the Collection of Prearranged Manuscripts (issued on March 8, 1980), JWS No. 26 (Spring, 1980) pp. 98—99, published by Kawahara et al of Babcock-Hitachi Co. Ltd., in April 1980 in the meeting of the Yosetsu Gakkai, the report entitled "Automatic Welding of Nozzles to Shells" of Metal Construction, September 1980, pp. 500—501, ASME Boiler and Pressure Vessel Code, pp. 82—83, and Japanese Laid-Open Publication No. 115647/1979.

US—A—3 797 813 discloses a method for welding of thick tubes which comprises providing a thick, large-sized tube laid approximately in a horizontal direction, disposing a thick, small-sized tube in such a manner as to be substantially intersected with said thick, large-sized tube, so that the small-sized tube is jointed to said large-sized tube and a gap is established between the small-sized tube and said large-sized tube, and welding the small-sized and large-sized tubes together approximately in a downhand position while moving a welding head, which is capable of being moved concentrically with said small-sized tube, along the outer periphery of said small-sized tube. It is to be noted that the above-mentioned gap is in the form of a narrow "V".

US—A—4188526 discloses a method of welding thick plate materials in which the conventional "V" gap is replaced by a narrow gap of I-form.

An object of the present invention is to provide a method and apparatus for the narrow gap welding of, for example, nozzles to a pressure vessel in which automatic welding is accurately feasible along a weld line which changes in a complicated fashion in the form of a saddle.

According to the present invention, there is provided a method for the narrow gap welding of thick tubes which comprises providing a thick, large-sized tube laid approximately in a horizontal direction, disposing a thick, small-sized tube in such a manner as to be substantially intersected with said thick, large-sized tube so that the small-sized tube is jointed to said large-sized tube and a gap is established between the small-sized tube and said large-sized tube, and welding the small-sized and large-sized tubes together approximately in a downhand position while moving a welding head, which is capable of being moved concentrically with said small-sized tube, along the outer periphery of said small-sized tube, characterised in that an extension of a welding wire is detected and the vertical movement of the welding head is controlled so as to keep the extension substantially constant, and in that said gap has a narrow I form, and in that said welding wire is made of a plurality of twisted strand wires.

According to the present invention there is further provided an apparatus for carrying out the above method which comprises a swivel base, a swivel shaft which extends vertically from said swivel base for rotation in coincidence with the axis of the thick, small-sized tube to be welded, a welding head which has a welding wire and a shielding gas nozzle, and which is connected to said swivel shaft in such a way that said welding head is capable of being rotated around said swivel shaft so at to allow the movement thereof around the outer periphery of said small-sized tube, a means for rotating said welding head, a means for feeding the welding wire, and a control means for controlling an extension of the welding wire by moving said welding head vertically based on the signal from said control means, the said welding wire being made of a plurality of twisted strand wires.

In the accompanying drawings:

Figure 1, as mentioned above, is a perspective view partially broken away, of a conventionally nozzle-welded portion,

Figure 2, as mentioned above, is a perspective view, partially broken away, of a conventionally nozzle-welded portion,

Figure 3, as mentioned above, is a sectional, illustrative development showing a part of the section of Figure 1,

Figure 4, as mentioned above, is a sectional, illustrative development showing a part of the section of Figure 2,

Figure 5 is a perspective view, partially broken away, of a nozzle welded to a base tube according to the invention,

Figure 6 is a sectional, illustrative development showing a part of the section of Figure 5,

Figure 7 is a graph showing a relation between the wire feeding rate and welding current,

Figure 8 is a graph showing a relation between the wire feeding rate and welding current;

Figures 9(a) and 9(b) are illustrative views showing inclined welding positions;

Figure 10 is a schematic, illustrative view of an apparatus for carrying out the method of the invention;

Figure 11 is a schematic view showing a gas shielded metal arc narrow gap welding process using an intertwisted welding wire;

Figures 12(a) and 12(b) are a sectional view and a partially broken away sectional view showing one embodiment of the invention, respectively;

Figure 13 is a sectional illustrative view of another embodiment of the invention;

Figure 14 is a schematic view of a box type gas shielding nozzle and,

Figure 15 is a schematic view of an insertion type gas shielding nozzle.

As described above the method of the present invention uses a set-in technique to dispose a nozzle approximately in a vertical direction for joining with a thick base tube, the groove formed in the base tube is shaped to have a narrow I form, and a welding head which is capable of being rotated concentrically with and around the nozzle is moved along the outer periphery of the nozzle and is downhand welded, while detecting an extension of the welding wire and controlling the vertical movement of the welding head so as to keep the extension substantially constant.

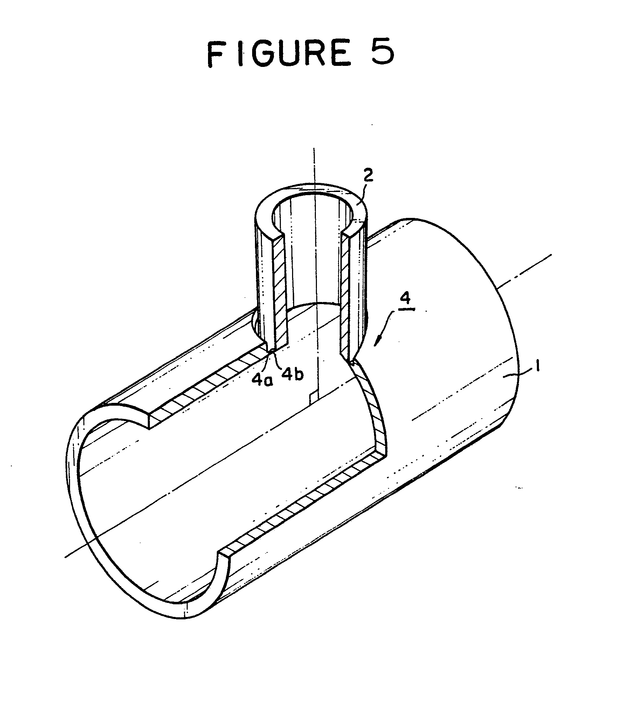

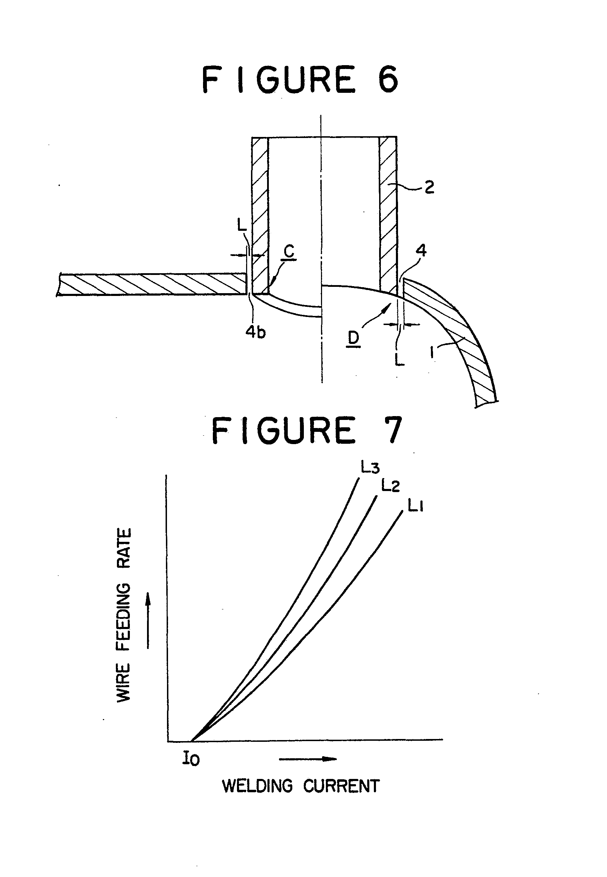

Referring now to Figures 5 and 6, there is shown an embodiment of the invention in which a nozzle is welded to a base tube according to the welding method of the invention. A base tube 1 laid approximately horizontally is jointed to a nozzle 2 which is disposed in an intersecting direction with respect to the base tube 1, i.e. in a vertical direction. A groove 4a of narrow I form is formed around the junction port of the base tube 1 as shown. The groove 4a has a U-shaped root 4b to prevent molten metal from burning through. If a backing material is used, the root may be removed to give a complete narrow I groove. The formation of the narrow I groove along the outer periphery of the nozzle 2 means that the circumference of the junction port of the base tube 1 is formed as the groove 4a which is parallel to the outer surface of the nozzle 2. This is very advantageous in that the edge preparation is simple with the working speed being improved, and in that the groove widths L at the upper side C and lower side D of the groove can be made equal. Accordingly, a torch which is concentrically moved along the nozzle 2 can be moved without being adjusted finely in the direction of the X axis as in the case of the V groove of Figure 1 while being adjusted only in the direction of the Y axis. The control of the torch which is traced vertically in the direction of the Y axis can be made by adjusting only the vertical movement of the weld line of the saddle form which can be mathematically dealt with and by adjusting the transfer portion of preceding beads which changes depending on the multi-layer welding, thus being very suitable for automatic welding.

When the narrow I groove is formed, as described above, by the set-in system in the saddle-shaped portion where the thick nozzle is jointed to the thick base tube, a tracing control substantially in the direction of the Y axis alone is sufficient. Use of a welding apparatus having a detecting means capable of achieving such control permits automatic welding to be very easily carried out.

The use of a detecting and controlling means and the use of a particular welding means does not, *per se*, limit the present invention but we have investigated and developed suitable means for automatic welding and illustrate the method and apparatus using such means.

The automatic welding is suitably conducted when the welding current and wire feeding rate are detected at the time of arc generation and then the wire extension, i.e. the distance between the tip of the welding wire and the base metal (or more precisely, wire extension=(distance between the tip and a base metal)−(arc gap)) is controlled to hold it constant.

The detection of the wire extension and the subsequent control of vertical movement of the welding wire are described below in detail.

The wire feeding rate can be detected by taking out an armature voltage of a wire feeding motor or a tacho generator voltage connected to the wire feeding motor. The welding current can be obtained by measuring the voltage of a shunt unit. It has been found that there is a relation between the wire feeding rate and welding current as shown in Figure 7. In Figure 7, the wire extensions ($L_1$, $L_2$ and $L_3$ provided that $L_1<L_2<L_3$) are taken as a parameter and a relation between the welding current and wire feeding rate is shown. When the wire feeding rate is taken as V and the welding current is taken as I, the following equation is given:

$$V=k_1I+k_2I^2 \qquad (1)$$

in which $k_1$ and $k_2$ are proportional constants.

The relation of these two variables is thus expressed by a secondary function and when an intersecting point between the secondary curve and the axis of welding current is taken as Io, the following equation is given:

$$V=\alpha I(I-Io) \qquad (2)$$

in which $\alpha$ is a proportional constant depending on the wire extension.

Accordingly, when the measured wire feeding rate V and welding current I are substituted into the equation (2) and both laterals or sides are compared with each other, it can be judted whether a set wire extension is longer ($L_3$) than, for example, $L_2$ or shorter ($L_1$).

By controlling the vertical movement of the welding head so as to hold the wire extension constant based on these results of the above judgement, the tracing in the vertical directions of the saddle-shaped weld line can be made very accurately.

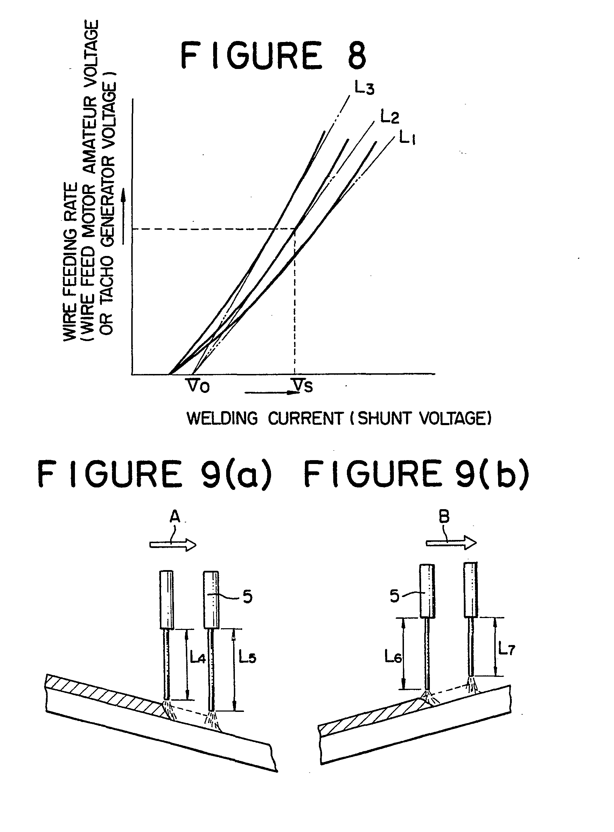

Then, when the armature voltage or tachometer generator voltage is taken as VF and a voltage corresponding to the welding current from the shunt is taken as Vs, the relation between VF and Vs is shown in Figure 8 which is similar to Figure 7 in which the wire extension is also taken as a parameter. In this case, within appropriate ranges of the welding current and wire feeding rate which are determined according to the welding conditions such as sectional area of wire and welding position, both the variables can be approximated as a primary function which follows:

$$VF = \beta(Vs - Vo)$$

in which Vo is a maximum value of welding current at the time when the wire feeding rate is zero, and $\beta$ is a proportional constant determined by the wire extension.

Figures 9(a) and 9(b) illustrate cases where the welding position varies in a downward or upward direction as the welding proceeds. Figure 9(a) shows the welding position in the downward direction and Figure 9(b) shows the position of the upward direction. Thus, when the torch 5 moves downwardly in the direction of arrow A, the wire extension becomes longer ($L_4 < L_5$) provided that the feeding rate of wire is constant, with the result that the resistance increases correspondingly to an increment in length of the wire and thus the shunt voltage Vs is lowered [$VF > \beta$ (Vs—Vo)]. On the other hand, when the torch 5 moves in the direction of arrow B, i.e. in the upwardly inclined position, the wire extension becomes shorter ($L_6 > L_7$), with the resistance value being reduced by an increment in length of the wire, the shunt voltage Vs thus being lowered [$VF > \beta(Vs—Vo)$]. As will be appreciated from the above, the variation of the shunt voltage Vs is considered to result from the variation of the wire extension and thus it is sufficient to make an adjustment so as to return to a relationship of $VF = \beta$ (Vs—Vo) showing an optimum value of the wire extension, i.e. it is sufficient to keep the wire extension constant by descending the welding head for the former case and by ascending the welding head for the latter case. This control procedure is applicable to a method in which the wire feeding rate is controlled by feeding back either an arc voltage or welding current. By this control of the vertical movement, the vertical tracing is directed to the saddle-shaped weld line itself and fine variations such as an overlying on preceding layers at the time of continuous, multi-layer welding can be suitably traced.

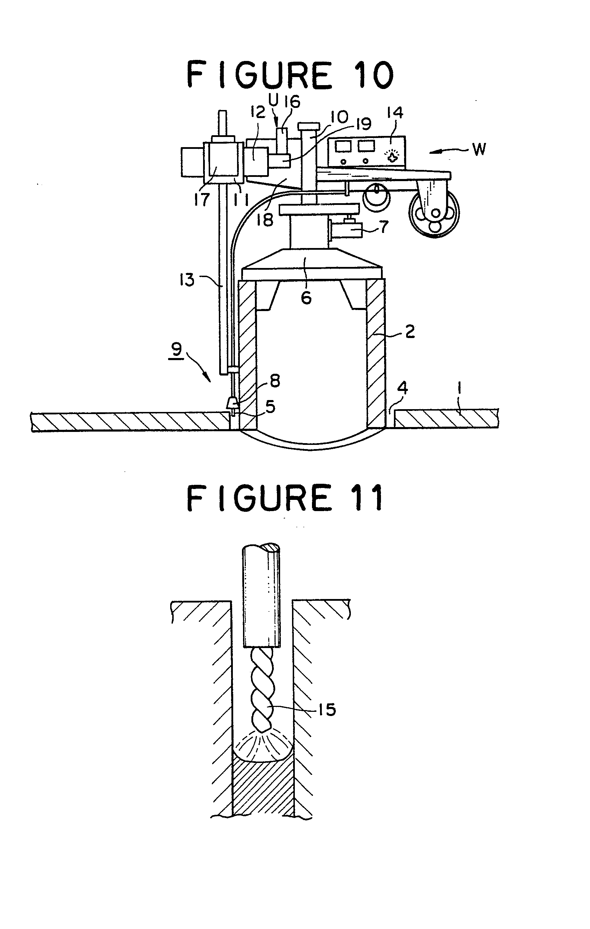

Figure 10 shows a welding apparatus suitable for carrying out the method of the invention. The welding apparatus generally indicated by W is mounted on the thick nozzle 2 and includes a swivel base 6, a swivelling shaft 10 and a welding head 9. The welding head 9 is disposed so that it can be rotated around the swivel shaft 10 having an axis of rotation which is coincident with the axis of the nozzle 2 and is moved along the outer periphery of the nozzle 2. The welding head 9 is connected to the swivel shaft 10 through a unit U having a bracket 18 fixed to the shaft 10, a screw shaft 19 supported by the bracket 18, a slider 12 mounted on the screw shaft 19 and capable of being moved in opposite horizontal directions along the screw shaft so as to regulate the radius of rotation of the welding head, and a slide arm 13 fixedly securing the welding head and capable of moving in a vertical direction so that the vertical position of the welding head can be controlled. Accordingly, when the screw shaft 19 is rotated by means of a drive motor 16, the slider 12 is moved horizontally in a direction depending on the direction of the rotation of the screw shaft, thereby adjusting the swivel radius of the welding head. A mounting 11 of the slider 12 has fixed thereon a motor 17, by which the slide arm 13 which is vertically supported by the mounting 11 is vertically moved. The arm 13 has at its tip the welding head 9 having a welding wire 5 and a shielding gas nozzle 8. The head 9 is vertically moved according to the vertical movement of the arm 13, and the narrow I groove is subjected to successive multi-layer welding using the welding wire 5. The drive motor 17 is driven on the basis of a signal from a control device 14 which serves to keep the wire extension constant.

It will be noted that the swivel shaft 10 is rotated by means of a motor 7 through a pinion fixed to the output shaft of the motor 7 at one end and meshed with the gear of the swivel shaft 10 at the other end. It is also to be noted that the welding apparatus is not limited to that described above and any type of welding apparatus in which a welding head having a wire feeding mechanism and in which a vertically tracing device is swivelled concentrically with the central axis of the nozzle may be used and, for example, the head may be mounted to an elevating mechanism of the manipulator type.

The welding wire used in the welding method according to the invention is one which is formed by intertwisting a plurality of wires of the same diameter for example by intertwisting two wires as shown in Figure 11. The arc from the intertwisted welding wire 15 as shown in the Figure is generated in a direction vertical to the cross section of the individual strand wires, i.e. it is generated while rotating in such a manner as to spread toward the outside from the central axis of the wire feeding direction. Accordingly, the molten metal beneath the arc is forced toward the groove sides. This ensures good fusion in the groove sides, coupled with another advantage that since the molten metal is supported by the groove sides by the rapid quenching effect and surface tension, defects rarely occur even in inclined welding positions. For instance, where the diameter of the nozzle 2 is half the diameter of the base tube 1, the maximum angle of inclination of the saddle-shaped weld line is about 15°.

In such an inclined position, it is virtually impossible to weld without defect in a conventional process, but very excellent welding results can be obtained according to this invention.

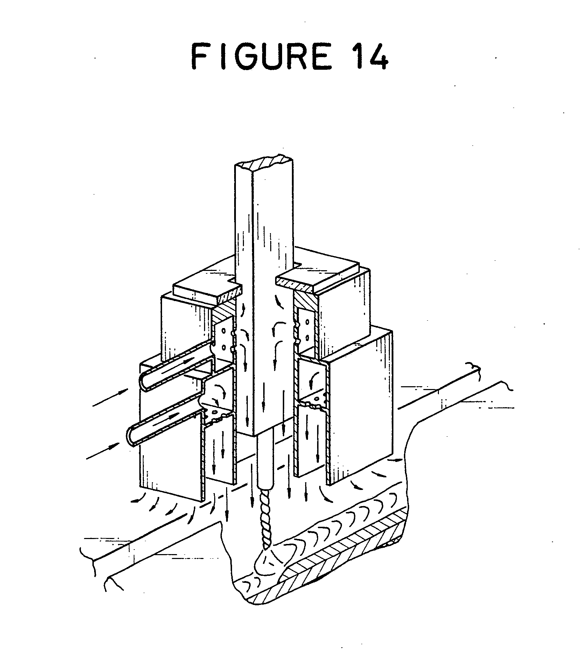

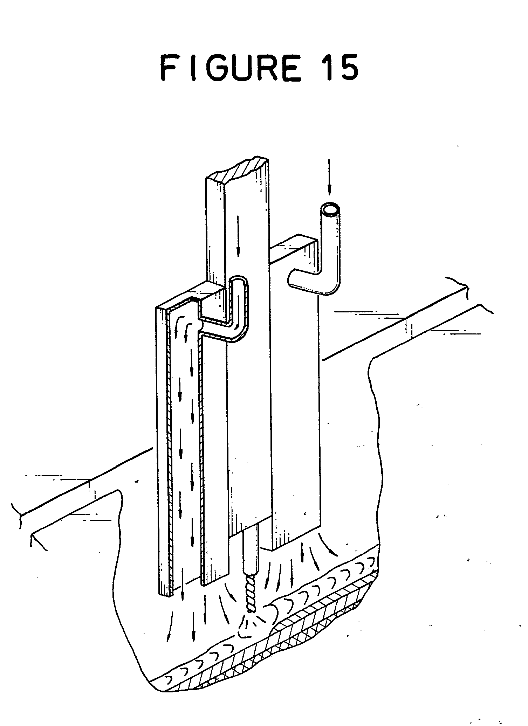

The gas shielding nozzle for the I-shaped narrow grooved gas shielded arc welding could be either a box type or insertion type gas shielding nozzle according to the groove depth. A box type gas shielding nozzle is used where the groove depth is less than about 50 mm groove depth, is located on the surface of the members to be welded, and feeds shielding gas to the inside of the welding groove. Figure 14 is a schematic view of box type gas shielding nozzle. An insertion type gas shielding nozzle is used where the groove depth is more than 50—80 mm, is located in the welding groove and parallel to the welding torch, and feeds shielding gas to the melting welding metal. Figure 15 is a schematic view of an insertion type gas shielding nozzle.

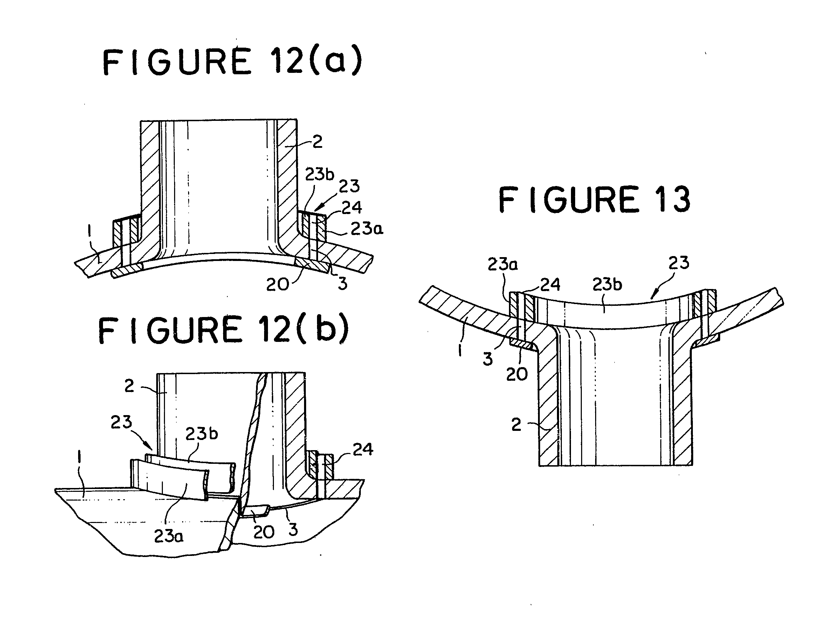

Another embodiment of the invention will now be described. Figure 12(a) is a sectional view showing a case where the narrow groove of I form has a depth of at least 50 mm and a gas shielding nozzle of the insertion type is used in the method of the invention. Prior to commencement of the welding, a groove-forming auxiliary jig 23 is placed at the side of the nozzle insertion of the I-shaped narrow groove 3. The jig 23 is made, for example, of metallic plates with a height of about 50 mm. In the embodiment shown in the Figure 12(a) an exterior ring 23a is placed at the side of the large-sized tube 1 and an interior ring 23b is placed at the side of the small-sized tube 2. These rings 23a, 23b have such bottom faces along the face of the base tube and are so formed as to have the same height (width) over the entirety thereof or to have the same height (width) when the height in vertical direction of the groove and the height in the vertical direction of the jig are added. In addition, a backing member 20 is provided below the groove 3 as shown. Where the weld line is in saddle form as shown in the Figures, it is possible to bring the lower faces of the rings 23a and 23b into intimate contact with the surface of the members to be welded and make the top faces flat. The gap established between the inner surface of the exterior ring 23a and the outer surface of the interior ring 23b is made equal to or slightly wider than a gap between the outer and inner walls of the I-shaped narrow groove thereby forming a temporary auxiliary groove 24. Figure 12(b) is a side view of Figure 12(a) but partially broken away to show more clearly the state of mounting of the auxiliary jig. It is recommended that the auxiliary jig 23 for the temporary auxiliary groove is made of a metallic plate 1 to 12 mm thick which is relatively easy to bend and has a suitable rigidity and is preferably made of a steel material of the same type as the materials to be welded. On mounting, the jig is temporarily welded so that the jig is brought to intimate contact with the surface of the members to be welded so that no gap is formed between the surfaces of the members and the lower face of the jig 23, or is sealed by a filler or an adhesive tape, thereby preventing air from flowing in upon gas gushing from the shielding nozzle of the insertion type set in the groove and also preventing the gas from releasing on welding of the upper surface of the groove.

By this, the narrow groove 3 can be welded from the bottom to the upper face by using the insertion-type shielding nozzle as it is. For instance, even when the insertion-type shielding nozzle rises near the upper face of the groove 3, it is positioned within the temporary auxiliary groove 24, so that the shielding gas can be effectively used, making it unnecessary to go to the trouble of exchanging with a box-type shielding nozzle.

Figure 13 shows a case where the auxiliary jig 23 is disposed in the large-sized tube 1. The auxiliary jig 23 is located at the side of the nozzle insertion of the I-shaped narrow groove.

Where the welding is conducted using the auxiliary jig 23 for forming a temporary groove, the welding is stopped when the welding beads are stacked near the upper face of the narrow groove on which the auxiliary jig is mounted. Subsequently, the auxiliary jig is removed, for example, by gas cutting, and the cut portion is finished by grinding or repair welding on the bead surface.

In this embodiment, the gas shielding arc welding is effected using an auxiliary jig for the groove such as described above, so that it is possible to continuously weld the whole groove by the use of an insertion-type shielding nozzle alone, thereby improving the welding efficiency greatly.

The present invention, or at least embodiments thereof, has the following advantages:

i) By forming the saddle-shaped weld line, which changes ina complicated fashion, as a narrow I groove, automatic multipass welding is possible by controlling only the tracing in vertical directions.
ii) Since the sectional area of the groove does not change, continuous welding in a constant welding state can be achieved.
iii) Where the vertical tracing control is conducted by detection of the extension of wire, there can be obtained a very reliable and excellent joint through the control is simple.
iv) A skilled welder is not required.

**Claims**

1. A method for the narrow gap welding of thick tubes which comprises providing a thick, large-sized tube (1) laid approximately in a horizontal direction, disposing a thick, small-sized tube (2) in such a manner as to be substantially intersected with said thick, large-sized tube (1) so that the small-sized tube (2) is jointed to said large-sized tube (1) and a gap (4a) is established between the small-sized tube (2) and said large-sized tube (1), and welding the small-sized and large-sized tubes (1, 2) together approximately in a downhand position while moving a welding head (9), which is capable of being moved concentrically with said small-sized tube (2), along the outer periphery of said small-sized tube (2), characterised in that an extension of a welding wire (5) is detected and the vertical movement of the welding head (9) is controlled so as to keep the extension substantially constant, and in that said gap (4a) has a narrow I-form, and in that said welding wire (5) is made of a plurality of twisted strand wires.

2. A method according to claim 1, wherein a feeding rate of the welding wire (5) and a welding current are measured and the extension of the welding wire (5) is controlled so as to be held substantially constant based on a relation between the feeding rate and the welding current.

3. A method according to claim 1 or 2, wherein prior to the welding, an auxiliary jig (23) is provided at the side of insertion of a shielding nozzle (8), said jig (23) being so formed as to extend toward the side of the nozzle insertion and made of two metallic plates (23a, 23b) spaced at a distance equal to or slightly greater than the width of the I-shaped narrow groove (4a).

4. A method according to claim 3, wherein said metallic plates (23a, 23b) are temporarily welded to the thick tubes (1, 2) or sealed with an adhesive or filler.

5. An apparatus for carrying out the method of claim 1, which comprises a swivel base (6), a swivel shaft (10) which extends vertically from said swivel base (6) for rotation in coincidence with the axis of the thick, small-sized tube (2) to be welded, a welding head (9) which has a welding wire (5) and a shielding gas nozzle (8), and which is connected to said swivel shaft (10) in such a way that said welding head (9) is capable of being rotated around said swivel shaft (10) so as to allow the movement thereof around the outer periphery of said small-sized tube (2), a means (7) for rotating said welding head (9), a means for feeding the welding wire, and a control means (14) for controlling an extension of the welding wire (5) by moving said welding head (9) vertically based on the signal from said control means (14), the said welding wire (5) being made of a plurality of twisted strand wires.

6. An apparatus according to claim 5, wherein said welding head (9) is connected to said swivel shaft (10) through a unit (U) which includes a bracket (18) fixed to said swivel shaft (10), a screw shaft (19) supported by said bracket (18), a slider (12) mounted on said screw shaft (19) and capable of being moved in opposite horizontal directions along said screw shaft (19) so as to regulate the radius of rotation of said welding head (9), and a slide arm (13) fixedly securing said welding head (9) and capable of moving in vertical direction so that the vertical position of said welding head (9) can be controlled.

7. An apparatus according to claim 5 or 6, wherein said groove (4a) has a U-shaped root at the bottom thereof to prevent molten metal from running down or the arc from blowing through.

8. An apparatus according to claim 5 or 6, wherein said groove (4a) is provided with a backing member (20) at the bottom thereof.

**Patentansprüche**

1. Verfahren zum Schweißen dicker Rohre mit schmalem Luftspalt, bei dem ein dickes, großes Rohr (1) etwa in horizontale Richtung gelget wird, ein dickes, kleines Rohr (2) derart gelegt wird, daß es das dicke, große Rohr (1) im wesentlichen schneidet angeordnet wird, so daß das kleine Rohr (2) und das große Rohr (1) zusammengefügt werden und ein Luftspalt (4a) zwischen dem kleinen Rohr (2) und dem großen Rohr (1) gebildet wird, und das kleine und das große Rohr (1, 2) etwa in einer normalen Lage durch Bewegen eines Schweißkopfes (9), der zentrisch zu dem kleinen Rohr (2) bewegt werden kann, entlang dem Außenumfang des kleinen Rohres (2) zusammengeschweißt werden, dadurch gekennzeichnet, daß eine Ausfährlänge eines Schweißdrahtes (5) ermittelt und die senkrechte Bewegung des Schweißkopfes (9) gesteuert wird, um die Ausfahrlänge im wesentlichen konstant zu halten, und daß der Luftspalt (4) eine schmale I-Form hat und daß der Schweißdraht (5) aus einer Vielzahl von miteinander verdrehten Drahtsträngen besteht.

2. Verfahren nach Anspruch 1, dadurch gekennzeichnet, daß eine Zufuhrgeschwindigkeit des Schweißdrahtes (5) und ein Schweißstrom gemessen werden und die Verlängerung des Schweißdrahtes (5) so gesteuert wird, daß sie im wesentlichen konstant gehalten wird auf Grundlage eines Verhältnisses zwischen der Zufuhrgeschwindigkeit und dem Schweißstrom.

3. Verfahren nach Anspruch 1 oder 2, dadurch gekennzeichnet, daß vor dem Schweißen an der Seite, an welcher eine Abschirmdüse (8) eingeführt wird, eine Hilfsvorrichtung (23) angebracht wird, welche so geformt ist, daß sie sich zu der Seite, an der die Abschirmdüse eingeführt wird, erstreckt und aus zwei metallischen Platten (23a, 23b) gebildet ist, die in einem Abstand voneinander liegen, der gleich oder etwas größer als die Breite der I-förmigen schmalen Fuge (4a) ist.

4. Verfahren nach Anspruch 3, dadurch gekennzeichnet, daß die metallischen Platten (23a, 23b) vorübergehend an die dicken Rohr (1, 2) angeschweißt oder mit einem Klebstoff oder Füller angekittet sind.

5. Vorrichtung zum Durchführen des Verfahrens nach Anspruch 1, dadurch gekennzeichnet, daß sie einen Drehfuß (6), eine sich senkrecht vom Drehfuß (6) erstreckende Drehwelle (10) zum Drehen koaxial zum anzuschweißenden dicken, kleinen Rohr (2), einen Schweißkopf (9) mit einem Schweißdraht (5) und einer Abschirm-Gasdüse (8), der an die Drehwelle (10) derart angeschlossen ist, daß der Schweißkopf (9) zusammen mit der Drehwelle (10) herumgedreht werden kann, um die Bewegung desselben um den Außenumfang des kleinen Rohres (2) zu ermöglichen, eine Einrichtung (7) zum Drehen des Schweißkopfes (9), eine Einrichtung zum Zuführen des Schweißdrahtes und eine Steuereinrichtung (14) zum Steuern einer Verlängerung des Schweißdrahtes (5) durch senkrechtes Bewegen des Schweißkopfes (9) gemäß dem Signal von der Steuereinrichtung (14) aufweist, wobei der Schweißdraht (5) aus einer Mehrzahl von miteinander verwundenen Drahtsträngen besteht.

6. Vorrichtung nach Anspruch 5, dadurch gekennzeichnet, daß der Schweißkopf (9) mittels einer Einheit (U), welche einen an der Drehwelle (10) befestigten Ausleger (18) aufweist, mit der Drehwelle (10) verbunden ist, daß ein Schraubenshaft (19) auf dem Ausleger (18) abgestützt ist, daß ein Schieber (12) auf dem Schraubenshaft (19) angeordnet ist und in entgegengesetzten horizontalen Richtungen entlang dem Schraubenschaft (19) bewegt werden kann, um den Drehradius des Schweißkopfes (9) einzustellen, und daß ein Schieberarm (13) am Schweißkopf (9) befestigt ist und in senkrechten Richtungen bewegt werden kann, so daß die senkrechte Lage des Schweißkopfes (9) gesteuert werden kann.

7. Vorrichtung nach Anspruch 5 oder 6, dadurch gekennzeichnet, daß die Fuge (4a) eine U-förmige Wurzel am unteren Ende aufweist, um zu verhindern, daß geschmolzenes Metall nach unten laufen oder der Lichtbogen durchbrennen kann.

8. Vorrichtung nach Anspruch 5 oder 6, dadurch gekennzeichnet, daß die Fuge (4a) an der Unterseite mit einer Unterlage (20) versehen ist.

**Revendications**

1. Une méthode pour le soudage à gorge étroite de tubes épais qui consiste à prévoir un tube épais de grande dimension (1) reposant approximativement dans une direction horizontale, à disposer un tube de petite dimension (2) d'une manière telle qu'il intersecte sensiblement avec ledit tube épais de grande dimension (1) de sorte que le tube de petite dimension (2) est jointif audit tube de grande dimension (1) et qu'une gorge (4a) est ménagée entre le tube de petite dimension (2) et le tube de grande dimension (1), et à souder les tubes de grande dimension et de petite dimension (1, 2) ensemble approximativement dans une position en aval tout en déplaçant une tête de soudure (9), qui est susceptible d'être entraînée concentriquement avec ledit tube de petite dimension (2), le long de la périphérie externe dudit tube de petite dimension (2), caractérisée en ce qu'un prolongement d'un cordon de soudure (5) est détecté et que le mouvement vertical de la tête de soudure (9) est commandé de façon à maintenir le prolongement sensiblement constant, et en ce que ladite gorge (4a) présente une forme étroite en I, et en ce que ledit cordon de soudure (5) est constitué d'une pluralité de brins torsadés.

2. Une méthode selon la revendication 1, dans laquelle une vitesse d'alimentation du cordon de soudure (5) et un courant de soudure sont mesurés et le prolongement du cordon de soudure (5) est commandé de façon à être maintenu sensiblement constant en s'appuyant sur une relation entre la vitesse d'alimentation et le courant de soudure.

3. Une méthode selon la revendication 1 ou 2, dans laquelle avant la soudure, un guidage auxiliaire (23) est prévu du côté de l'insertion d'un ajutage de protection (8), ce guidage (23) étant formé de façon à se prolonger vers le côté de l'insertion de l'ajutage et constitué de deux plaques métalliques (23a, 23b) espacées d'une distance égale ou légèrement supérieure à la largeur de la gouttière étroite conformée en I (4a).

4. Une méthode selon la revendication 3, dans laquelle lesdites plaques métalliques (23a, 23b) sont soudées temporairement aux tubes épais (1, 2) ou obturées de façon étanche avec un adhésif ou une charge.

5. Un appareil pour la mise en oeuvre de la méthode de la revendication 1, et qui comprend une base pivotante (6), un arbre pivotant (10) qui se prolonge verticalement à partir de ladite base pivotante (6) pour tourner en coïncidence avec l'axe du tube de petite/dimension épais (2) à souder, une tête de soudure (9) qui comporte un cordon de soudure (5) et un ajutage protecteur pour le gaz (8), et qui est connecté audit arbre pivotant (10) de façon telle que ladite tête de soudure (9) est susceptible de pivoter autour de l'arbre pivotant (10) de façon à permettre le mouvement de celui-ci autour de la périphérique extérieure dudit tube de petite dimension (2), un moyen (7) pour faire tourner ladite tête de soudure (9), un moyen pour alimenter en cordon de soudure, un moyen de commande (14) pour réguler un prolongement du cordon de soudure (5) en déplaçant la tête de soudure (9) verticalement en fonction du signal dudit moyen de commande (14), ledit cordon de soudure (5) étant constitué d'une pluralité de brins torsadés.

6. Un appareil selon la revendication 5, dans lequel ladite tête de soudure (9) est reliée audit arbre pivotant (10) par l'intermédiaire d'un élément (U) qui comprend une potence (18) fixée audit arbre pivotant (10), un arbre fileté (19) supporté par cette potence (18), un coulisseau (12) monté sur cet arbre fileté (19) et susceptible d'être déplacé dans des directions horizontales opposées le long dudit arbre fileté (19) de façon à réguler le rayon de rotation de ladite tête de soudure (9), et un bras coulissant (13) fixé solidement à ladite tête de soudure (9) et susceptible de se déplacer dans des directions verticales de façon que la position verticale de ladite tête de soudure (9) puisse être commandée.

7. Un appareil selon la revendication 5 ou 6, dans lequel ladite gorge (4a) présente un talon en forme de U sur son fond de façon à éviter que du métal fondu s'écoule vers le bas ou bien que l'arc ne souffle à travers.

8. Un appareil selon la revendication 5 ou 6, dans lequel ladite gorge (4a) est pourvue d'un élément de renforcement (20) sur son fond.

# FIGURE 1

# FIGURE 2

# FIGURE 3

# FIGURE 4

# FIGURE 5

# F I GURE 6

# F I GURE 7

# FIGURE 8

WIRE FEEDING RATE
(WIRE FEED MOTOR AMATEUR VOLTAGE
OR TACHO GENERATOR VOLTAGE)

L3
L2
L1

Vo — Vs

WELDING CURRENT (SHUNT VOLTAGE)

# FIGURE 9(a)   FIGURE 9(b)

A

5

L4   L5

B

5

L6   L7

6

# FIGURE 10

# FIGURE 11

# FIGURE 12(a)

# FIGURE 13

# FIGURE 12(b)

0 049 037

# FIGURE 14

# FIGURE 15